# EUROPEAN PATENT SPECIFICATION

(11) **EP 4 237 349 B1**
(45) Date of publication and mention of the grant of the patent: **18.12.2024**
(21) Application number: 21769421.5
(22) Date of filing: 27.08.2021
(51) Int. Cl.: B65G 1/04, B65G 1/02

(54) **A SHUTTLE FOR PROPELLING HORIZONTALLY AND VERTICALLY IN A RACKING SYSTEM**
SHUTTLE FÜR HORIZONTALEN UND VERTIKALEN ANTRIEB IN EINEM REGALSYSTEM
NAVETTE POUR PROPULSER HORIZONTALEMENT ET VERTICALEMENT DANS UN SYSTÈME DE RAYONNAGE

(30) Priority: 27.10.2020 EP 20204204
(43) Date of publication of application: 06.09.2023
(73) Proprietor: MOVU, 9160 Lokeren (BE)
(72) Inventor: VANDEMERGEL, Luc, 8020 Oostkamp (BE)
(74) Representative: IP HILLS NV
(86) International application number: PCT/EP2021/073790
(87) International publication number: WO 2022/089811

(56) References cited:
- WO-A1-2018/189110
- WO-A1-2019/157196
- WO-A2-2010/100513
- CN-A- 110 329 707
- US-B2- 10 435 241

## Description

### Field of the Invention

The present invention generally relates to a method to propel a shuttle horizontally and vertically in a racking system comprising horizontal tracks and vertical tracks.

### Background of the Invention

Racking systems comprising horizontal tracks and vertical tracks are known in the art. Such racking systems may be automated small parts shuttle racking systems. They allow storage of a multitude of goods in racks at different levels in the racks. Shuttles to collect and/or store the goods may automatically move horizontally in the aisles between the racks as well as up and down in the racks. Such shuttles use horizontal tracks to propel in a horizontal direction in the aisles. The shuttles may use vertical or inclined tracks to reach different levels in the racking system.

Examples of such a storage system using shuttles are given in US10435241.

Shuttles moving in such automated small parts shuttle racking system require high precision of the racking elements to guarantee proper and precise functioning of the system and satisfactory and accurate movement of the shuttle inside the system. Elements of the racks not adequately positioned may cause damage to both the racks and the shuttles. So there is a need for shuttles which can cope with such less accurate tolerances of the racking elements, while being able to propel accurately in horizontal and vertical direction in the aisles of the racking system, making use of horizontal and vertical tracks in the racking system. The shuttles need to be able to propel swiftly and without causing too much vibration to the racking system. The shuttles have a need for coupling systems to couple to the vertical tracks in a prudent way with little or no risk for damage to the coupling system and the vertical tracks when coupling.

### Summary of the Invention

It is an object of the present invention to provide a method to propel a shuttle according to the features of claim 1.

According to a first non-claimed aspect a shuttle for propelling horizontally and vertically in a racking system, such as an automated small parts shuttle racking systems, comprising horizontal tracks and vertical tracks is provided. The shuttle comprises a horizontal propelling system for propelling on horizontal tracks and a vertical propelling system for propelling in vertical tracks. The horizontal propelling system comprises at least 4 propelling wheels, which wheels each are retractable and extendable to and from one of the left and right side of the shuttle. The vertical propelling system comprises at least a first climbing system comprising a vertical wing retractable and extendable to and from the left or right side of the shuttle. This at least first vertical wing comprises at least two rotatable wheels, each rotatable around a wheel axis, the at least two rotatable wheels being
- one climbing wheel adapted to exercise a rotating movement for vertical propelling over a first vertical surface of a vertical track;
- one press wheel adapted to provide vertical guidance of the shuttle and to provide counter-pressure during vertical propelling to a second surface of the vertical track;
This at least first vertical wing further comprises a pivoting means adapted to pivot the two rotatable wheel axes of the two rotatable wheels around a pivot axis between a first position, wherein the climbing and press wheel are free of contacting the first and second vertical surface, and a second position, wherein the climbing and press wheel contact the first respectively the second vertical surface.

Preferably the pivot axis and the two rotatable wheel axes are parallel.

A vertical wing is to be understood as a wing being an extendable vertical propelling unit.

The counter-pressure is the pressure needed to compensate the pressure exercised by the climbing wheel on the first vertical surface during vertical propelling.

The pivoting means hence can bring the axes of the rotatable wheels, and by consequence the two rotatable wheels themselves, from a first to a second position, and back from the second position to the first position. Preferably, the two rotatable wheel axes are positioned substantially one above the other when these axes are in the first position. After extending the wing inside the profile comprising the first and second vertical surface of the vertical track, the pivoting means, by pivoting the rotatable wheel axes to the second position, may bring the two rotatable wheels in contact with the respective vertical surfaces of the vertical track. By driving the climbing wheel, the shuttle may propel up- or downwards along the vertical track. During the propelling, the shuttle may hang cantilevered in the vertical track. During vertical propelling, the at least 4 propelling wheels from the horizontal propelling system may be retracted to the shuttle, such they pass next to the horizontal tracks during vertical propelling up- or downwards. Preferably at least two of the at least four propelling wheels are positioned at the left side of the shuttle, at least two of the at least four propelling wheels are positioned at the right side of the shuttle. Preferably at least two of the at least four propelling wheels are positioned at the front side of the shuttle, at least two of the at least four propelling wheels are positioned at the backside of the shuttle. Once the shuttle is brought at height, the propelling wheels of the horizontal propelling system are extended so they can make contact with horizontal tracks, thereby supporting the shuttle on these horizontal tracks.

According to some embodiments, the pivoting means may comprise
- a cam system and/or
- a motor and/or
- a lever and/or
- a converting means to convert a horizontal motion of the shuttle into a pivoting of the two wheel axes of the two rotatable wheels around a pivot axis from a first position to a second position.

The pivoting means may, alternatively or additionally, comprise a pneumatic system and/or an electromagnetic system to pivot the two wheel axes of the two rotatable wheels around a pivot axis from a first position to a second position and back from the second position to the first position. The pivoting means may, alternatively or additionally, comprise a wedge system to pivot the two wheel axes of the two rotatable wheels around a pivot axis from a first position to a second position and back from the second position to the first position. The pivoting means may, alternatively or additionally, comprise any mechanical system converting a linear to a rotational movement, to pivot the two wheel axes of the two rotatable wheels around a pivot axis from a first position to a second position and back from the second position to the first position.

. The pivoting axis may be coinciding with one of the two rotating wheel axes or is positioned below, above or crossing with an imaginary line connecting the two rotating wheel axes.

According to some embodiments, the wing may comprise a cam system to conduct the pivoting means, the cam-system comprising a lever, the cam system being one of
- an eccentric wheel or eccentric cylinder optionally with an irregular outer circumference pushing the lever;
- a wheel or cylinder provided with a slot in which a pin being coupled to the lever is slidably positioned in said slot.

The cam system hence comprises a cam which can be
- an eccentric wheel or eccentric cylinder optionally with an irregular outer circumference pushing the lever;
- a wheel or cylinder provided with a slot in which a pin being coupled to the lever is slidably positioned in said slot;
a lever being a cam follower and rotating round a lever axis due to the movement of the cam.

Preferably the two rotatable wheels are coupled to the lever, most preferably one of the wheels at each outer end of the lever. Preferably the pivot axis is the rotation axis of the lever, also referred to as lever axis. When the pivoting means pivots from the first position to the second of vice versa, the lever is rotated round the lever axis. This lever axis is preferably parallel to the two rotatable wheel axes.

The climbing wheel may be driven by a driving means, which can be on board of the shuttle. By means of a driving shaft and optionally a transmission system, the driving means may provide a rotational movement to the climbing wheel. Possibly, the lever axis is coinciding with the axis of the driving shaft. The rotational movement of the driving shaft may be transferred to the climbing wheel by means of an appropriate transmission means, e.g. a driving wheel being in contact with the climbing wheel. This driving wheel may e.g. be a gearwheel when the climbing wheel is a gearwheel itself. The transmission means may make use of chains, belts or a similar transmission mechanism.

According to some embodiments, the width of the extended wing may be less than 35mm enabling to pass the horizontal tracks while vertically propelling.

To propel from one level in the racking to another level, the shuttle climbs up or down by its vertical propelling system which is in contact with a vertical track. At the position where the wing, while being extended towards the vertical track, passes a horizontal track, the horizontal track needs to be interrupted in order to allow the wing passing the horizontal path that the shuttles may follow along this horizontal track. A.o. in order to limit the vibrations caused by the shuttles propelling in the racking, the interruption or 'gap' of the horizontal tracks at the position where they cross the vertical tracks, needs to be as small as possible. Consequently, at the position where the wing which needs to pass through this interruption, the wing must be as thin as possible. Therefore, to be able to pass the horizontal tracks while vertically propelling, the width of the wing in extended condition and in this position, is to be limited, and preferably to be less than 35mm. The gap or interruption of the horizontal track is preferably less than 50mm. The interruption of the horizontal track needs to be wider than the width of the wing in extended condition and at the position in direction of extension along the extended wing where the wing crosses the horizontal track. The width at a given position along the wing in the direction of extension is the distance in horizontal direction between the point of the wing closest to the front end of the shuttle at this given position along the wing in the direction of extension and the point of the wing closest to the backend of the shuttle at this given position along the wing in the direction of extension.

In order to keep the width of the wing as thin as possible, the elements bridging the outmost point of the extended wing in direction of extension and the side or chassis of the shuttle itself, are preferably positioned in a vertical plane. Such elements may be a driving shaft and extendable support bars and alike.

According to some embodiments, the climbing wheel is one of
- A gearwheel adapted to engage with a toothed bar provided at the first vertical surface of the vertical track;
- A sprocket adapted to engage into a vertical chain present at a first vertical surface of the vertical track;
- A profiled climbing wheel adapted to engage with a corresponding profile present on the first vertical surface of the vertical track;
- A friction wheel adapted to engage on the first vertical surface of the vertical track.

The climbing wheel is preferably a wheel with a profiled circumference. The profile may be provided in radial direction around the wheel. In case of a gearwheel or a sprocket, this radial profile is a toothed profile. The profile engages with a corresponding profile on the first vertical surface of the vertical track. This first vertical surface may be at the inner side of a profile, comprising at least the first and second flange of the profile of the vertical track, and a web. The first and second vertical surface may be mutually opposed in the vertical track. They may be e.g. the flanges of a profile, like a U, C, C+, sigma, sigma+ or omega profile. The climbing wheel during propelling vertically (being climbing upwards or downwards) will transfer the rotational movement of the climbing wheel into a vertical displacement of the shuttle along the first vertical surface.

The pivoting means will bring the climbing wheel from a first position, where it is not in contact, hence is free of contact, with the first vertical surface, to a second position, where the climbing wheel will make contact with the first vertical surface. In a similar way, the press wheel will be brought from a first position, where it is not contacting, hence is free of contact, with the second vertical surface, to a second position where it makes contact with this second vertical surface. Preferably, when the two rotatable wheels, being the climbing wheel and the press wheel, are in first position, the axes of these two rotatable wheels, which are preferably parallel, define a substantially vertical plane. As such, the width of the wing at the position of the rotatable wheels, can be kept minimal, such as being the maximum diameter of the largest rotatable wheel. Because this part of the wing is preferably inserted in a vertical track recess, the opening of the vertical track, e.g. when being a profile, can be kept minimal as well.

According to some embodiments, the climbing wheel is a gearwheel, a sprocket or a profiled wheel, a distance wheel is provided adjacent to and on the same axis as said climbing wheel, the distance wheel limits the penetration depth of the climbing wheel in respectively the toothed bar, the chain or the profile present on the first vertical surface of the vertical track.

In order to prevent the profiled climbing wheel, such as toothed climbing wheel, from excessive forces, the depth of penetration of the profile into the corresponding profile on the first vertical surface is preferably kept within allowable ranges. A distance wheel adjacent and coaxial with the climbing wheel, which distance wheel contacts a surface adjacent the profiled part of the first surface of the vertical track, and limiting the depth of penetration, may prevent to some extend too early wear out of the climbing wheel and/or the profiled first surface of the vertical track. The climbing wheel and the distance wheel may be coupled to each other, and are coaxial. The distance wheel may be a cylindrical flange which is provided to the climbing wheel. In the alternative, distance wheels non coaxial with the climbing wheel may be used.

The distance wheel may have a flat surface, or may be provided with an axial profile, such as a protrusion, e.g. a rib or rill, or a recess around the whole circumference of the distance wheel. When axially profiled, the distance wheel may engage with a corresponding elongate profile on the surface with which the distance wheel makes contact. Such axial profiled distance wheel may prevent drifting of the shuttle in a direction in a horizontal direction perpendicular to the horizontal propelling direction. As such, the distance wheel functions also as a guiding wheel.

The press wheel may have a flat surface, or may be provided with an axial profile, such as a protrusion, e.g. a rib or rill, or a recess around the whole circumference of the press wheel. When axially profiled, the press wheel may engage with a corresponding elongate profile on the second vertical. Such axial profiled press wheel may prevent drifting of the shuttle in a horizontal direction perpendicular to the horizontal propelling direction. As such, the press wheel may function as a guiding wheel.

According to some embodiments, when the pivot means is in the second position, the distance between the gravity point and the first vertical surface of the vertical track may be less than the distance between the gravity point and the second vertical surface of the vertical track.

In particular, when the shuttle is in unloaded condition, the distance between the gravity point and the first vertical surface of the vertical track may be less than the distance between the gravity point and the second vertical surface of the vertical track. Positioning the gravity point as such, may cause a guaranteed engaging between the climbing wheel and the first vertical surface of the vertical track when the shuttle is cantilevered in the vertical track or tracks.

More preferred, the distance between the gravity point and the first vertical surface of the vertical track, such as in unloaded condition, is kept small, such as less than or equal to 250mm. A small distance between the gravity point and the first vertical surface of the vertical track may limit the horizontal pressure between the climbing wheel and the first vertical surface of the vertical track, and between the press wheel and the second vertical surface of the vertical track. This may allow lighter constructions to be used and may reduce the couple needed to drive the climbing wheel.

The vertical propelling system may comprise a first and a second climbing system, one climbing system at each of the left and right side of the shuttle. According to some embodiments, the vertical propelling system may comprise a first and a second climbing system, one climbing system at each of the left and right side of the shuttle, the shuttle comprises a first and a second motor, the first motor driving the first climbing system, the second motor driving the second climbing system.

The two climbing systems may comprise the same elements and may function in an identical or similar way. Preferably they are both present at the same position of the shuttle in the direction parallel to the horizontal propelling direction. Most preferably they are both present at the front or backend of the shuttle. The two climbing systems may be mirrored images one from the other.

Driving the climbing systems each with a motor provide that the two climbing systems are decoupled and function independently one from the other. As such, during extension of the wings and bringing the climbing wheel and first vertical surface aligned, one of the climbing systems may tune the position of the climbing wheel independently from the other climbing system to enable the climbing wheel and the first vertical surface of this one climbing system to match snuggly.

In the alternative, the two climbing systems may be driven by one motor, where the driving system may include a friction element or a differential to decouple to some extent the two climbing systems actions.

According to some embodiments, the horizontal propelling system comprising at least four propelling wheels, two being positioned at the left side of the shuttle, two being positioned at the right side of the shuttle, at least one of the propelling wheels at the left side may be driven by the first motor, at least one of the propelling wheels at the right side may be driven by the second motor.

When this first motor is also coupled to a first climbing system and the second motor is also coupled to the second climbing system, according to some embodiments, each motor may be provided with a coupling means to couple the motor to either at least one of the propelling wheels or to the climbing system.

Possibly the horizontal propelling system comprises at least four pairs of propelling wheels, two pairs being positioned at the left side of the shuttle, two pairs being positioned at the right side of the shuttle, at least one pair of the propelling wheels at the left side may be driven by the first motor, at least one pair of the propelling wheels at the right side may be driven by the second motor.

In alternative embodiments, the shuttle may comprise only one motor, i.e. the central motor, to drive the horizontal propelling system and the climbing systems. Appropriate coupling means are provided to couple this central motor to the horizontal propelling system and/or the climbing systems.

The shuttle may further comprise electrical components to control and steer the shuttle actions. The shuttle may also comprise a battery to store the electrical energy needed to feed the motors and electrical components.

The motors used are preferably electromotors. The used motors may be DC motors, such as brushless DC motors. The motors preferably are individually steered thereby allowing to compensate deviation between the propelling distances on the propelling tracks followed.

Additional motors (also possibly DC motors, such as brushless DC motors) may be used to rotate a cam, rotate a lever, rotate the pivot means, extend or retract the wings and/or the propelling wheels and alike.

According to some embodiments, the wing may comprise a guiding means to prevent the shuttle to move sideways in direction of the axis of the climbing wheel beyond a maximum distance.

Such guiding means may e.g. be a roller ball mount in e.g. a swivel frame. The roller ball may be mount spring-loaded. The guiding means may compensate to small deviations on the vertical track in which the shuttle propels.

According to some embodiments, the shuttle further may comprise a pivot wheel at one of the front- or backside of the shuttle. The plane defined by the lowest point of the pivot wheel and the lowest points of two propelling wheels at the left and right side of the shuttle, which two propelling wheels are closest to the other of the front and backside of the shuttle, may be downwards inclined in view of the plane defined by the lowest points of the propelling wheels at the left and right side of the shuttle. The pivot wheel may hence extend lower than the lowest extending propelling wheel. For the two propelling wheels at the left and right side of the shuttle, one of these propelling wheels is at the left side of the shuttle, the other propelling wheel is at the right side of the shuttle.

During propelling on a level in the racking system, the shuttle is vertically supported by the propelling wheels on the horizontal tracks. On ground level or if present, in mezzanines in the racking system, the provision of a pivot wheel which extends lower than the lowest propelling wheel, cause the shuttle to be vertically supported by the pivot wheel and some of the propelling wheels, usually the two propelling wheels which are most remote from the pivot wheel, one at the left side of the shuttle, the other at the right side of the shuttle. This because preferably each propelling wheel has a lowest point being coplanar with the lowest points of the other propelling wheels. When supported on the pivot wheel and two of the propelling wheels, the latter being driven, this may allow the shuttle to freely move and follow curved paths on the ground level or, if present, in mezzanines present in the racking system.

According to some embodiments, the horizontal propelling system further may comprise horizontal guiding wheels, which are retractable and extendable together with the retraction and extension of the propelling wheels.

These wheels, being an example of horizontal guiding means, which may be provided to the shuttle, will guide the shuttle during its propelling on the horizontal tracks within the aisles of the racking system. Alternatively, it may be roller balls mount in e.g. a swivel frame. The horizontal guiding means, e.g. wheels or roller balls, may be mount spring-loaded. The horizontal guiding means may compensate to small deviations on the horizontal track on which the shuttle propels. Preferably at least four horizontal guiding means are provided, one near each corner of the shuttle.

According to some embodiments, at each side of the shuttle, the propelling wheels are paired, the interaxial distance between the propelling wheels of each of the pairs of propelling wheels may be adapted to span the gap between adjacent horizontal tracks.

Possibly the horizontal propelling system comprises at least four pairs of propelling wheels, two pairs being positioned at the left side of the shuttle, two pairs being positioned at the right side of the shuttle, at least one pair of the propelling wheels at the left side may be driven by the first motor, at least one pair of the propelling wheels at the right side may be driven by the second motor. The use of pairs of propelling wheels is preferred, as this may reduce the vibration caused in the racking system when propelling the shuttle over the interruptions or "gaps" of the horizontal tracks. The interaxial distance of the propelling wheels in the pairs of propelling wheels is preferably larger than the width of the interruption of the horizontal tracks, e.g. larger than 35mm such as larger than 50mm. As such, possibly always one of the pair of propelling wheels is in contact with a horizontal track, avoiding to a large extent bumping actions of the shuttle passing the interruptions.

The shuttle may further comprise other elements, such as a chassis on which all elements of the shuttle are built and supported. The shuttle also comprises a platform to support and carry goods during propelling of the shuttle.

According to the claimed invention, a method to propel a shuttle in a racking system, such as an automated small parts shuttle racking system, is provided. The method comprises the steps:
- providing a shuttle according to the first aspect;
- providing a racking system having vertical tracks and horizontal tracks, the horizontal tracks defining at least two levels;
- position the shuttle with its first climbing system in front of a vertical track, the two rotatable wheels being in the first position;
- extend the wing towards the vertical track;
- rotate the pivot means to bring the two rotatable wheels in the second position;
- rotate the climbing wheel to move the shuttle upwards to break contact of propelling wheels with horizontal track;
- retract the propelling wheels;
- propel the shuttle to a different level in the racking system, the shuttle being brought above this different level;
- extract the propelling wheels;
- rotate the climbing wheel to move the shuttle downwards to establish contact of propelling wheels with horizontal track;
- rotate the pivot means to bring the two rotatable wheels in the first position;
- retract the wing away from the vertical track.

The independent and dependent claims set out particular and preferred features of the invention. Features from the dependent claims may be combined with features of the independent or other dependent claims, and/or with features set out in the description above and/or hereinafter as appropriate. Features of one aspect of the invention may be combined with features of the other aspects as appropriate. The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief Description of the Drawings

Figure 1 is a schematically view of a shuttle propelling in a rack.
Figure 2 is schematically view of a vertical wing being part of a shuttle.
Figure 3A to figure 3C are schematically views of a vertical wing being part of a shuttle inserted in the recess of a vertical track
Figure 4 and figure 5 are schematically top views of a vertical wing being part of a shuttle inserted in the recess of a vertical track
Figures 6A to 6N show schematically views of pivoting means.
Figure 7 is a schematically view of a profiled press wheel contacting a vertical track.
Figure 8A to figure 8E are schematically views of a shuttle propelling horizontally and vertically in a racking system.

The same reference signs refer to the same, similar or analogous elements in the different figures.

### Detailed Description of Embodiment(s)

The present invention will be described with respect to particular embodiments. It is to be noticed that the term "comprising", used in the claims, should not be interpreted as being restricted to the means listed thereafter; it does not exclude other elements or steps. It is thus to be interpreted as specifying the presence of the stated features, steps or components as referred to, but does not preclude the presence or addition of one or more other features, steps or components, or groups thereof. Thus, the scope of the expression "a device comprising means A and B" should not be limited to devices consisting only of components A and B. It means that with respect to the present invention, the only relevant components of the device are A and B.

Throughout this specification, reference to "one embodiment" or "an embodiment" are made. Such references indicate that a particular feature, described in relation to the embodiment is included in at least one embodiment of the present invention. Thus, appearances of the phrases "in one embodiment" or "in an embodiment" in various places throughout this specification are not necessarily all referring to the same embodiment, though they could.

Furthermore, the particular features or characteristics may be combined in any suitable manner in one or more embodiments, as would be apparent to one of ordinary skill in the art.

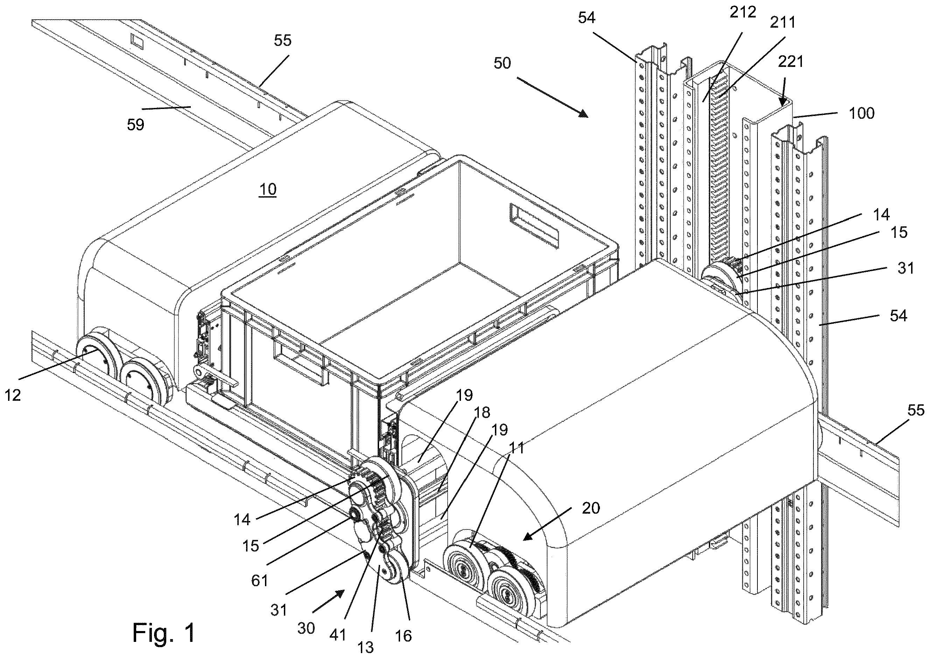

A shuttle 10 for propelling horizontally and vertically in a racking system 50 comprising horizontal tracks 55 and vertical tracks 100 is shown in figure 1. The vertical track 100 is positioned between two uprights 54 of the racking system. The shuttle 10 comprises a horizontal propelling system 20 for propelling on horizontal tracks and a vertical propelling system 30 for propelling in vertical tracks. The horizontal propelling system 20 comprises 8 propelling wheels 11 and 12, 2 pairs at each side of the shuttle 10. One of the pairs of wheels 11 are driven wheels. The other pairs of wheels 12 are not driven. The wheels each are retractable and extendable to and from one of the left and right side of the shuttle 10. During horizontal propelling, the wheels 11 and 12 turn on a horizontal surface 59 of the horizontal tracks 55. The wheels 12 and the wing 13 on one side of the shuttle are driven by a first motor, while the wheels 12 and the wing 13 on the other side of the shuttle are driven by a second motor.

The vertical propelling system 30 comprises two climbing systems 31, one at each side of the shuttle 10. Each climbing system 31 comprises a vertical wing 13 which is retractable and extendable to and from the left or right side of the shuttle. Each wing 13 comprises one climbing wheel 14, in this embodiment being a gearwheel, adapted to exercise a rotating movement for vertical propelling over a first vertical surface, being a profiled surface 211 of a toothed bar 116 being part of a vertical track 100. Coaxially with this climbing wheel 14 is a guiding wheel 15 which is slightly larger in diameter as compared to the climbing wheel. The guiding wheel 15 contacts a flat surface 212 being part of the toothed bar 116 and being adjacent the profiled surface 211. The wing 13 of the climbing system 31 further comprises a press wheel 16 which is adapted to provide vertical guidance of the shuttle and to provide counter-pressure during vertical propelling to a second surface 221 of the vertical track. The wing is retractable and extendable to and from the left or right side of the shuttle by means of two support bars 19. The climbing system is driven by means of a central drive axis 18. This drive axis 18 drives a second gearwheel 41, which is in contact with and transfers its rotation to the climbing wheel 14.

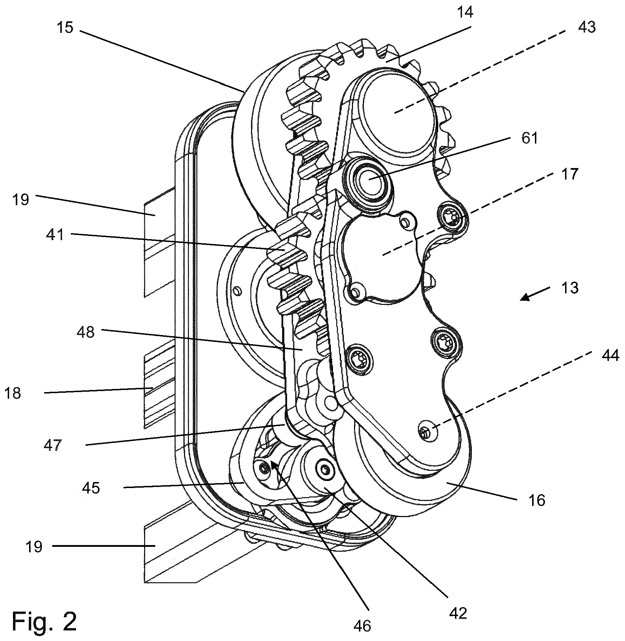

An exploded view of the wing 13 is shown in figure 2. The vertical wing 13 comprises a pivoting means 42 adapted to pivot the axes 43 and 44 of the climbing wheel 14 and the press wheel 16 around a pivot axis 17 between a first position, wherein the climbing and press wheel are free of contacting the first and second vertical surface, and a second position, wherein the climbing and press wheel contact the respective vertical surfaces. In the embodiment shown, the pivoting means 42 comprises a wheel 44 provided with a slot 46 in which a pin 47, being coupled to a lever 48, is slidably positioned. Rotating of the wheel 45 will cause the axes 43 and 44 of the climbing wheel 14 and the press wheel 16 to pivot around pivot axis 17 between a first position and a second position. The pivot axis 17 is coinciding with the axis of the second gearwheel 41 transferring the driving power to the climbing wheel.

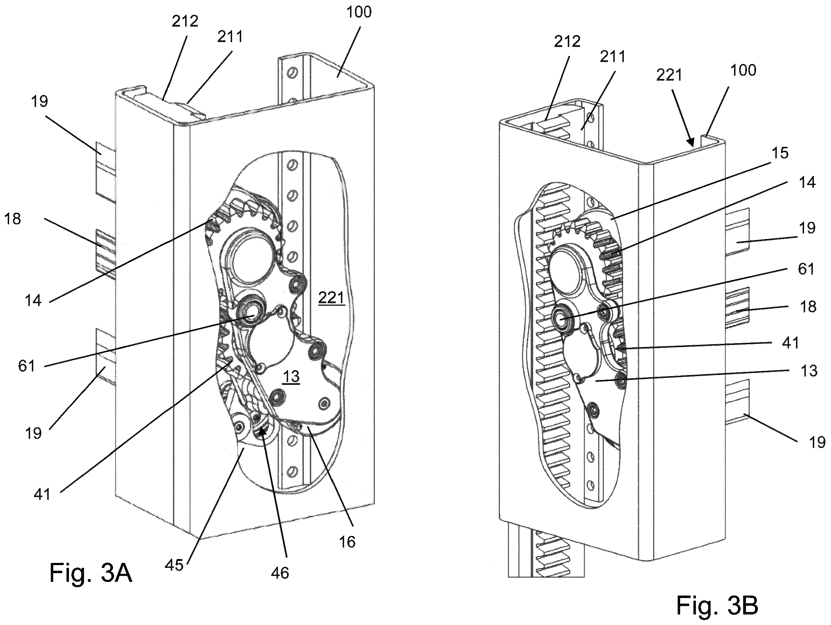

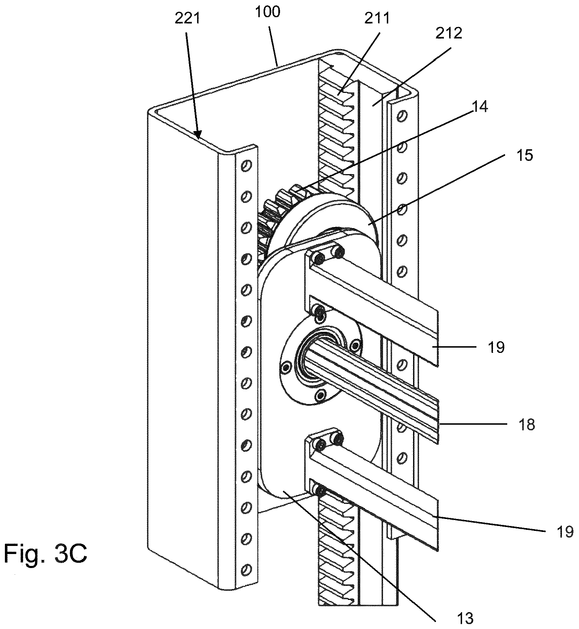

The contacts between the vertical track 100 and the elements of the vertical wing 13 are illustrated in figures 3A to 3C, in which figures a part of the web of the vertical track is removed from the view. The pivoting means 42 is in its second position where the climbing and press wheel is contacting the first and second surface of the vertical track 100. As shown in figure 3A, the press wheel 16 presses against the second surface 221 of the vertical track 100. As shown in figure 3B, the climbing wheel 14 is in contact with the toothed bar 116, more particularly with the profiled surface 211 of the vertical track 100. As shown in figure 3C, the guiding wheel 15 is in contact with the flat surface 212 of the vertical track 100.

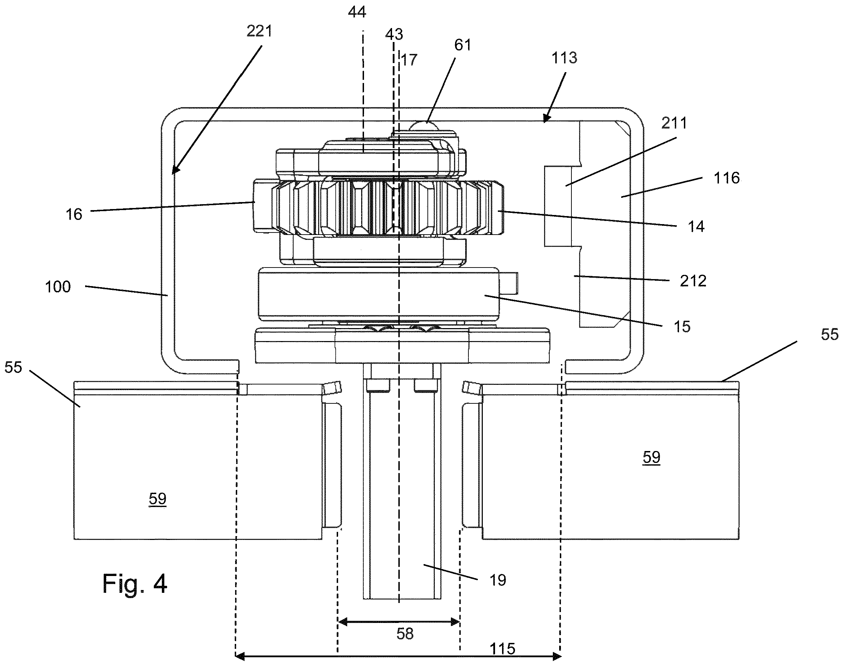

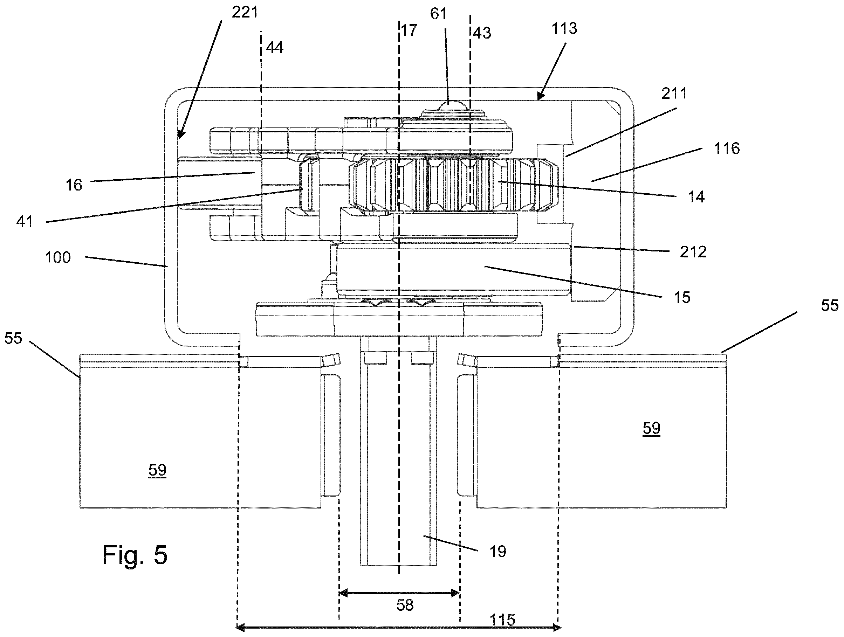

In figure 4 and 5, the vertical wing 13 being inserted in the recess 114 of the vertical track 100 is shown in its first and second position. In figure 4, the vertical wing 13 is in its first position where there is no contact between the climbing wheel 14 and the press wheel 16 and the respective surfaces 211 and 221 of the vertical track 100. During extension and retraction of the wing 13, the wing 13 can slide nicely into the recess 114 by passing the wing 13 through the opening 115 at the front side of the vertical track 100. When the axes 43 and 44 of the climbing wheel 14 and the press wheel 16 are pivoted around a pivot axis 17 to the second position, as shown in figure 5, the climbing wheel 14 and press wheel 16 contact the profiled surface 211 and the flat surface 221. The guiding wheel 15 will contact flat surface 212. The surfaces 211 and 212 are provided by a toothed bar 116, which can be positioned and adjusted in the profile of the vertical track 100.

In figure 5, it is shown that the horizontal tracks 55 are interrupted at each crossing with a vertical track 100. Two horizontal tracks 55 are coplanar, while between the two ends of the horizontal tracks 55, a gap 58 is provided. This allows the support bars 19 and the drive axis 18 to pass through the gap 58 when the shuttle 10 propels vertically between two levels of the racking system. Also shown in figures 4 and 5, a guiding means 61 to prevent the shuttle to move sideways in direction of the axis of the climbing wheel beyond a maximum distance is provided. This guiding means 61 contacts the inner surface 113 of the web of the profiled vertical track 100. The guiding means 61 can be a roller ball being spring loaded.

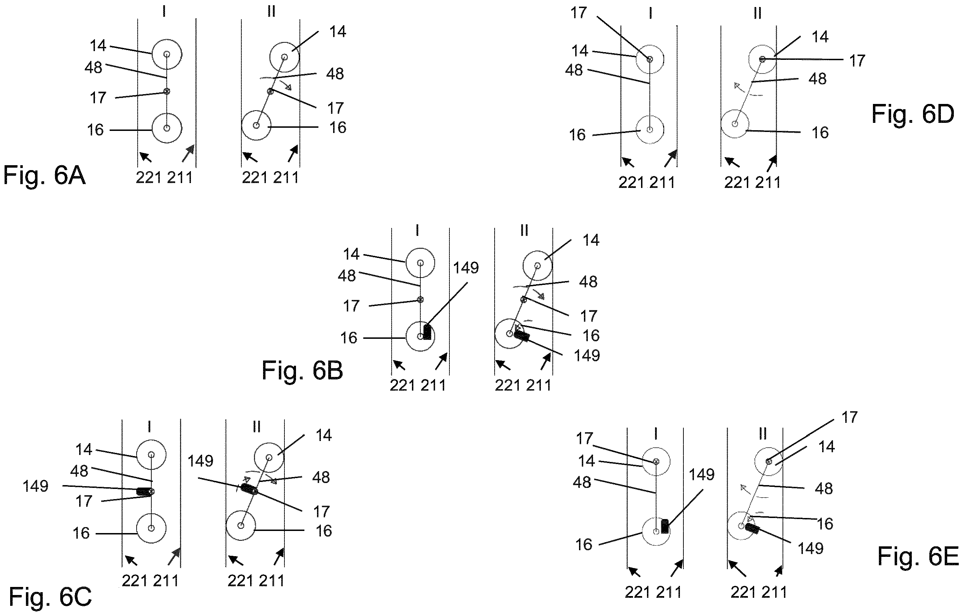

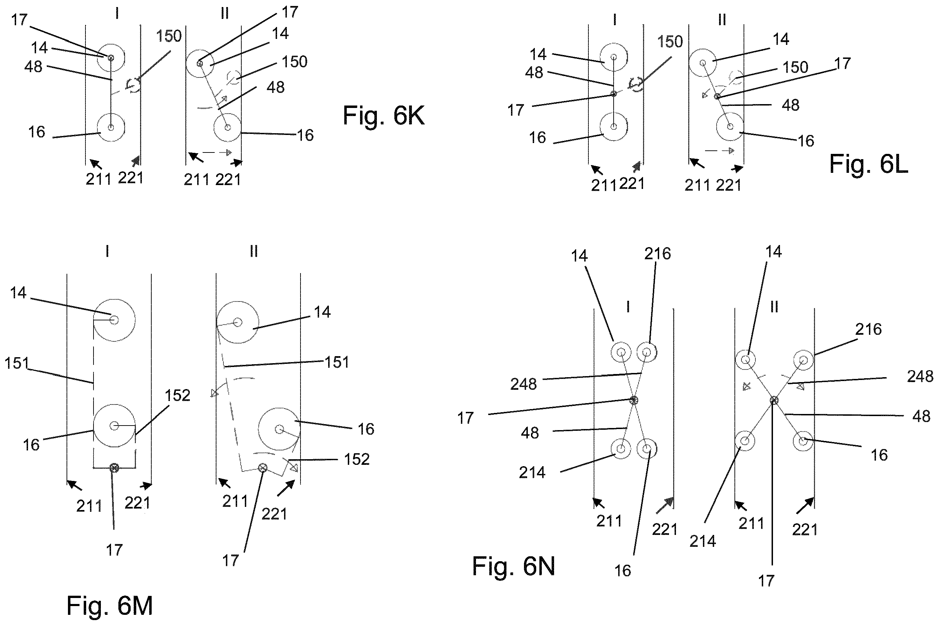

Figures 6A to 6N show various embodiments of possible pivoting means which are adapted to pivoted around a pivot axis 17 from a first position I where no contact with the vertical surfaces 211and 221 is made by the climbing wheel 14 and the press wheel 16, to a second position II where the climbing wheel 14 and the press wheel 16 contact the vertical surfaces 211 and 221. In figures 6A to 6N, the first position is indicated with "I", the second position is indicated "II". In the embodiments shown in figures 6A to 6C, the pivot axis 17 is central in view of the lever 48 coupling the climbing wheel 14 and the press wheel 16. From the first position I, the rotation around the pivot axis 17 to the second position II (and back) is torque driven in the embodiment of figure 6A. In figure 6B, the rotation of a cam 149 generates the rotation of the pivot axis 17 from the first position I to the second position II and back. In figure 6C, a lever 148 is rotated, generating the rotation around the pivot axis 17 from the first position I to the second position II (and back).

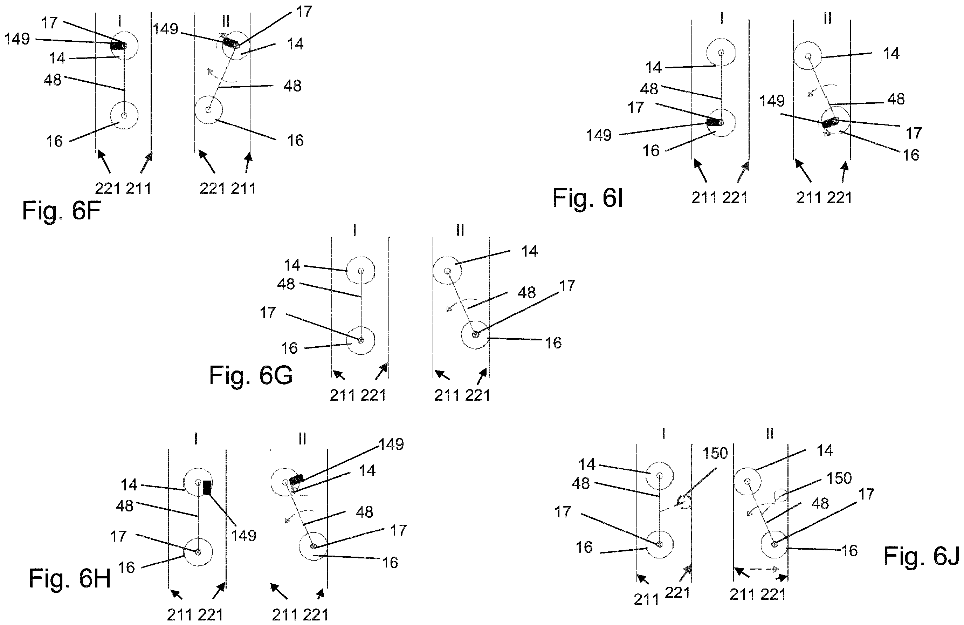

In the embodiments shown in figures 6D to 6F, the pivot axis 17 coincides with the wheel axis of the climbing wheel 14. From the first position I, the rotation around the pivot axis 17 to the second position II (and back) is torque driven in the embodiment of figure 6D. In figure 6E, the rotation of a cam 149 generates the rotation of the pivot axis 17 from the first position I to the second position II and back. In figure 6F, a lever 148 is rotated, generating the rotation around the pivot axis 17 from the first position I to the second position II (and back).

In the embodiments shown in figures 6G to 6I, the wheel axis of the press wheel 16 coincides with the pivot axis 17. From the first position I, the rotation around the pivot axis 17 to the second position II (and back) is torque driven in the embodiment of figure 6G. In figure 6H, the rotation of a cam 149 generates the rotation of the pivot axis 17 from the first position I to the second position II and back. In figure 6I, a lever 148 is rotated, generating the rotation around the pivot axis 17 from the first position I to the second position II (and back).

In the embodiments shown in figures 6J to 6L, the rotation around the pivot axis 17 is caused by a forward movement of the shuttle, while the wing is inserted in the vertical track. A contact wheel 150 being coupled to the lever 48, meets one of the vertical surfaces, in these embodiments surface 221, before the press wheel 16 contacts this surface. The forward movement of the shuttle, and the rigid coupling of the contact wheel 150 and the lever 48, cause the lever 48, and hence the climbing wheel 14 and press wheel 16 to pivot around a pivot axis 17. This pivot axis 17 may be located coinciding with the axis of the press wheel 16 (figure 6J) or with the axis of the climbing wheel 14 (figure 6K). in another embodiment in figure 6H, the pivot axis 17 may be centrally between the climbing wheel 14 and the press wheel 16.

In the embodiment shown in figure 6M, the pivot axis 17 is located offset the lever 48 coupling the climbing wheel 14 and the press wheel 16. The pivot axis 17 is coupled to the climbing wheel 14 and the press wheel 16 with two coupling means 151 and 152. Using e.g. a torque driven rotation of the coupling means in opposite direction, or by an upwards movement of the pivot axis 17, the climbing wheel 14 and press wheel 16 are rotated to the surfaces to contact. The opposite movement from position II to position I is made by the reverse action.

A further alternative embodiment is shown in figure 6N. The pivot axis 17 is central of the lever 48 coupling the climbing wheel 14 and the press wheel 16. A second climbing wheel 214 and a second the press wheel 216 are provided, being coupled with a lever 248. The two levers 48 and 248 cross centrally at pivot axis 17. The two pairs of wheels are both rotatable around the same pivot axis 17. These rotations are torque driven, but the rotations are in an opposite direction. By rotating around the pivot axis from position I to position II, the two climbing wheels 14 and 214 are brought in to contact with the first surface 211, while the two press wheels 16 and 216 are contacting the second surface 221. By the opposite rotations, the wheels are disconnected from the surfaces and brought from position II to position I.

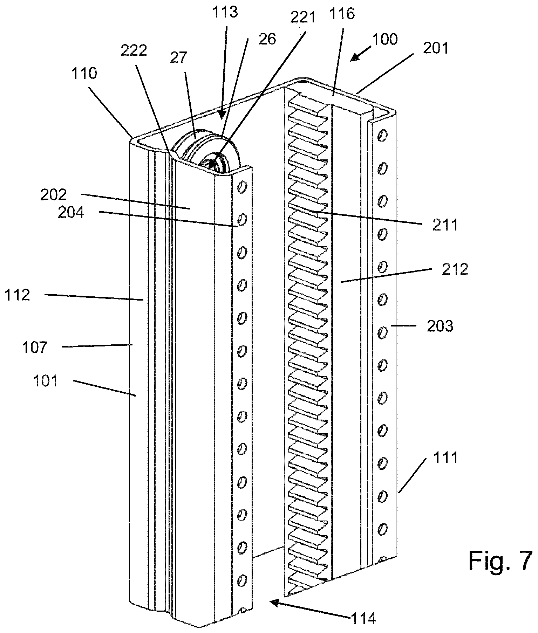

Figure 7 shows an alternative embodiment of the vertical track 100. Figure 7 shows vertical track 100 being a C-profile 107, which additionally has a non-flat surface 221. The surface 221 is provided with a rib, a bulge or a protrusion 222 directed inwards the recess 114 of the profile. This protrusion will guide a profiled press wheel 26. The profiled press wheel 26 will contact the non-flat surface 221 having a protrusion 222. The profiled press wheel has a profile like a groove or recess 27 around its circumference. The protrusion 222 and recess 27 match and as such, during vertical propelling, of the shuttle the recess will run over the protrusion, thereby avoiding horizontal drifting of the shuttle while vertically propelling in the vertical track 107.

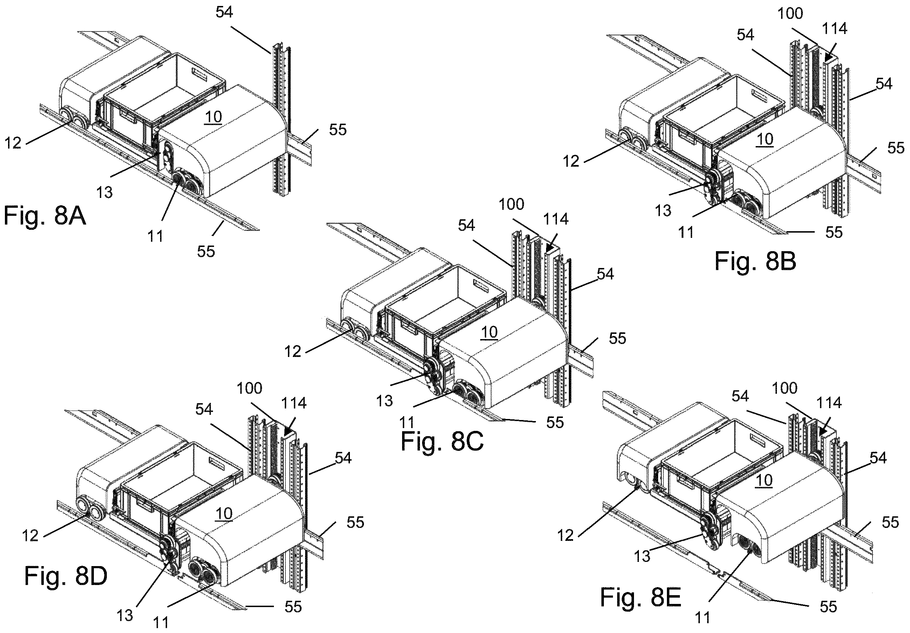

A sequence of actions executed by the shuttle 10 when propelling vertically between different levels in the racking system is shown in figures 8A to 8E. For clarity of the figures, the vertical tracks and uprights at the right side of the shuttle are not shown. In a first step (figure 8A), the shuttle is horizontally propelled until the climbing systems, more particular the wings 13 of the climbing system, are in front of the vertical track 100 (figure 8B). During horizontal propelling, the wings 13 are in retracted position in the shuttle 10. The wheels 11 and 12 are in extended position and the shuttle 10 rests on the horizontal tracks 55 by the wheels 11 and 12. In a second step (figure 8B) the wings 13 of the climbing systems at both sides of the shuttle are extended until they are positioned in the recess 114 of the vertical track 100. During this extension, the pivot means is in its first position. In the third step (figure 8C) the pivot means is brought in its second position. The climbing wheel and the press wheel is brought in contact with the respective surfaces inside the vertical track 100. In the fourth step, the shuttle 10 is lifted from the horizontal tracks 55 by rotating the climbing wheel. The shuttle 10 is now cantilevered in the vertical track 100. This is shown in figure 8D. In the fifth step, the wheels 11 and 12 are retracted towards the shuttle 10 (see figure 8E). The shuttle 10 is now able to pass from one level in the racking system to another level. The shuttle can vertically propel. The shuttle 10 is vertically propelled until the shuttle 10 is positioned such that its wheels 11 and 12 are above the horizontal tracks of the level it is propelling to. The steps shown in figures 8A to 8E are now executed in reverse order. The shuttle 10 is in a position as shown in figure 8E. Its wheels 11 and 12 are extended until they are above the horizontal surfaces of the horizontal tracks 55 (figure 8D). The shuttle 10 is moved down until the wheels 11 and 12 contact the horizontal surfaces of the horizontal tracks 55 while the pivot means is in its second position (figure 8C). The pivot means is pivoted in its first position (figure 8B), and the wings 13 are retracted to the shuttle 10. The shuttle 10 can now propel horizontally on the new level of the racking system (shown in figure 8A).

It is to be understood that although preferred embodiments and/or materials have been discussed for providing embodiments according to the present invention, various modifications or changes may be made without departing from the scope of the invention as defined in the claims.

## Claims

1. A method to propel a shuttle in a racking system, the method comprises the steps
- providing a racking system having vertical tracks (100) and horizontal tracks (55), the horizontal tracks defining at least two levels;
- providing a shuttle (10) for propelling horizontally and vertically in said racking system, the shuttle comprising a horizontal propelling system (20) for propelling on horizontal tracks and a vertical propelling system (30) for propelling in vertical tracks,
• the horizontal propelling system comprises at least 4 propelling wheels (11, 12), which wheels each are retractable and extendable to and from one of the left and right side of the shuttle; **characterised in that**:
• the vertical propelling system comprises at least a first climbing system comprising a vertical wing (13) retractable and extendable to and from the left or right side of the shuttle;
said at least first vertical wing comprising at least two rotatable wheels (14, 15, 16), each rotatable around a wheel axis the at least two rotatable wheels being
• one climbing wheel (14) adapted to exercise a rotating movement for vertical propelling over a first vertical surface of a vertical track;
• one press wheel (15, 16) adapted to provide vertical guidance of the shuttle and to provide counter-pressure during vertical propelling to a second surface of the vertical track;
• said at least first vertical wing comprising a pivoting means (42) adapted to pivot the two rotatable wheel axes (43, 44) of the two rotatable wheels around a pivot axis (17) between a first position, wherein the climbing and press wheel are free of contacting the first and second vertical surface, and a second position, wherein the climbing and press wheel contact the first respectively the second vertical surface; wherein the method comprises the steps:
- position the shuttle with its first climbing system in front of a vertical track, the two rotatable wheels being in the first position;
- extend the wing towards the vertical track;
- rotate the pivot means to bring the two rotatable wheels in the second position;
- rotate the climbing wheel to move the shuttle upwards to break contact of propelling wheels with horizontal track;
- retract the propelling wheels;
- propel the shuttle to a different level in the racking system, the shuttle being brought above this different level;
- extract the propelling wheels;
- rotate the climbing wheel to move the shuttle downwards to establish contact of propelling wheels with horizontal track;
- rotate the pivot means to bring the two rotatable wheels in the first position;
- retract the wing away from the vertical track.

2. A method according to claim 1, wherein said pivoting means comprises
• a cam system and/or
• a motor and/or
• a lever (48) and/or
• a converting means to convert a horizontal motion of the shuttle into a pivoting of the two wheel axes of the two rotatable wheels around a pivot axis from a first position to a second position.

3. A method according to claim 1 or 2, wherein the wing comprises a cam system (149) to conduct the pivoting means, the cam-system comprising a lever, the cam system is one of
• an eccentric wheel or eccentric cylinder optionally with an irregular outer circumference pushing the lever;
• a wheel or cylinder provided with a slot in which a pin being coupled to the lever is slidably positioned in said slot.

4. A method according to any one of the claims 1 to 3, wherein the width of the extended wing is less than 35mm enabling to pass the horizontal tracks while vertically propelling.

5. A method according to any one of the preceding claims, wherein the climbing wheel is one of
• A gearwheel (41) adapted to engage with a toothed bar provided at the first vertical surface of the vertical track;
• A sprocket adapted to engage into a vertical chain present at a first vertical surface of the vertical track;
• A profiled climbing wheel adapted to engage with a corresponding profile present on the first vertical surface of the vertical track;
• A friction wheel adapted to engage on the first vertical surface of the vertical track.

6. A method according to claim 5, wherein the climbing wheel is a gearwheel, a sprocket or a profiled wheel, a distance wheel is provided adjacent to and on the same axis as said climbing wheel, the distance wheel limits the penetration depth of the climbing wheel in respectively the toothed bar, the chain or the profile present on the first vertical surface of the vertical track.

7. A method according to any one of the preceding claims, wherein, when the pivot means is in the second position, the distance between the gravity point and the first vertical surface of the vertical track is less than the distance between the gravity point and the second vertical surface of the vertical track.

8. A method according to any one of the preceding claims, wherein the vertical propelling system comprises a first and a second climbing system, one climbing system at each of the left and right side of the shuttle, the shuttle comprises a first and a second motor, the first motor driving the first climbing system, the second motor driving the second climbing system.

9. A method according to claim 8, wherein the horizontal propelling system comprising at least four propelling wheels, two being positioned at the left side of the shuttle, two being positioned at the right side of the shuttle, at least one of the propelling wheels at the left side is driven by the first motor, at least one of the propelling wheels at the right side is driven by the second motor.

10. A method according to claim 9, wherein each motor is provided with a coupling means to couple the motor to either at least one of the propelling wheels or to the climbing system.

11. A method ▪ according to any one of the preceding claims, wherein said wing comprises a guiding means (61) to prevent the shuttle to move sideways in direction of the axis of the climbing wheel beyond a maximum distance.

12. A method according to any one of the preceding claims, wherein said shuttle further comprising a pivot wheel at one of the front or backside of the shuttle, the plane defined by the lowest point of the pivot wheel and the lowest points of two propelling wheels at the left and right side of the shuttle, which two propelling wheels are closest to the other of the front and backside of the shuttle, is downwards inclined in view of the plane defined by the lowest points of the propelling wheels at the left and right side of the shuttle.

13. A method according to any one of the preceding claims, wherein the horizontal propelling system further comprises horizontal guiding wheels, which are retractable and extendable together with the retraction and extension of the propelling wheels.

14. A method according to any one of the preceding claims, wherein at each side of the shuttle, the propelling wheels are paired, the interaxial distance between the propelling wheels of each of the pairs of propelling wheels is adapted to span the gap between adjacent horizontal tracks.

15. A method according to any one of the preceding claims, wherein said racking system is an automated small parts shuttle racking system.

## Patentansprüche

1. Verfahren zum Antreiben eines Shuttles in einem Regalsystem, wobei das Verfahren die folgenden Schritte umfasst
- Bereitstellen eines Regalsystems mit vertikalen Schienen (100) und horizontalen Schienen (55), wobei die horizontalen Schienen zumindest zwei Ebenen definieren;
- Bereitstellen eines Shuttles (10) zum horizontalen und vertikalen Antreiben in dem Regalsystem, wobei das Shuttle ein horizontales Antriebssystem (20) zum Antreiben auf horizontalen Schienen und ein vertikales Antriebssystem (30) zum Antreiben auf vertikalen Schienen umfasst,
• wobei das horizontale Antriebssystem zumindest 4 Antriebsräder (11, 12) umfasst, wobei die Räder jeweils zu und von einer von der linken und der rechten Seite des Shuttles einziehbar und erweiterbar sind;
**dadurch gekennzeichnet, dass**:
• das vertikale Antriebssystem zumindest ein erstes Klettersystem umfassend einen vertikalen Flügel (13) umfasst, der zu und von der linken oder der rechten Seite des Shuttles einziehbar und erweiterbar ist;
wobei der zumindest erste vertikale Flügel zumindest zwei drehbare Räder (14, 15, 16) umfasst, die jeweils um eine Radachse drehbar sind, wobei die zumindest zwei drehbaren Räder Folgendes sind
• ein Kletterrad (14), das ausgelegt ist, um eine Drehbewegung zum vertikalen Antreiben über eine erste vertikale Oberfläche einer vertikalen Schiene auszuführen;
• ein Druckrad (15, 16), das ausgelegt ist, um vertikale Führung des Shuttles bereitzustellen und um Gegendruck während des vertikalen Antreibens auf eine zweite Oberfläche der vertikalen Schiene auszuüben;
• wobei der zumindest erste vertikale Flügel ein Schwenkmittel (42) umfasst, das ausgelegt ist, um die zwei drehbaren Radachsen (43, 44) der zwei drehbaren Räder um eine Schwenkachse (17) zwischen einer ersten Position, wobei das Kletter- und das Druckrad die erste und die zweite vertikale Oberfläche nicht kontaktieren, und einer zweiten Position, wobei das Kletter- und das Druckrad die erste bzw. die zweite vertikale Oberfläche kontaktieren, zu schwenken;
wobei das Verfahren die folgenden Schritte umfasst:
- Positionieren des Shuttles mit seinem ersten Klettersystem vor einer vertikalen Schiene, wobei die zwei drehbaren Räder in der ersten Position sind;
- Erweitern des Flügels zu der vertikalen Spur;
- Drehen des Schwenkmittels, um die zwei drehbaren Räder in die zweite Position zu bringen;
- Drehen des Kletterrads, um das Shuttle nach oben zu bewegen, um Kontakt der Antriebsräder mit der horizontalen Schiene zu unterbrechen;
- Einziehen der Antriebsräder;
- Antreiben des Shuttles auf eine andere Ebene in dem Regalsystem, wobei das Shuttle über diese andere Ebene gebracht wird;
- Herausziehen der Antriebsräder;
- Drehen des Kletterrads, um den Schlitten nach unten zu bewegen, um Kontakt der Antriebsräder mit der horizontalen Schiene herzustellen;
- Drehen des Schwenkmittels, um die zwei drehbaren Räder in die erste Position zu bringen;
- Einziehen des Flügels weg von der vertikalen Schiene.

2. Verfahren nach Anspruch 1, wobei das Schwenkmittel Folgendes umfasst
• ein Nockensystem, und/oder
• einen Motor, und/oder
• einen Hebel (48), und/oder
• ein Umwandlungsmittel zum Umwandeln einer horizontalen Bewegung des Shuttles in ein Schwenken der zwei Radachsen der zwei drehbaren Räder um eine Schwenkachse von einer ersten Position zu einer zweiten Position.

3. Verfahren nach Anspruch 1 oder 2, wobei der Flügel ein Nockensystem (149) umfasst, um die Schwenkmittel zu führen, wobei das Nockensystem einen Hebel umfasst, wobei das Nockensystem eines von Folgendem ist
• einem Exzenterrad oder Exzenterzylinder, optional mit einem unregelmäßigen Außenumfang, der den Hebel drückt;
• einem Rad oder Zylinder, der mit einem Schlitz bereitgestellt ist, in dem ein Stift, der an den Hebel gekoppelt ist, verschiebbar in dem Schlitz positioniert ist.

4. Verfahren nach einem der Ansprüche 1 bis 3, wobei die Breite des erweiterten Flügels weniger als 35 mm ist, was Passieren der horizontalen Schienen während des vertikalen Antreibens ermöglicht.

5. Verfahren nach einem der vorhergehenden Ansprüche, wobei das Kletterrad eines von Folgendem ist
• einem Zahnrad (41), das ausgelegt ist, um in eine Zahnstange einzugreifen, die an der ersten vertikalen Oberfläche der vertikalen Schiene bereitgestellt ist;
• einem Kettenrad, das ausgelegt ist, um in eine vertikale Kette einzugreifen, die an einer ersten vertikalen Oberfläche der vertikalen Schiene vorhanden ist;
• einem profilierten Kletterrad, das ausgelegt ist, um in ein entsprechendes Profil einzugreifen, das auf der ersten vertikalen Oberfläche der vertikalen Schiene vorhanden ist;
• einem Reibrad, das ausgelegt ist, um in die erste vertikale Oberfläche der vertikalen Schiene einzugreifen.

6. Verfahren nach Anspruch 5, wobei das Kletterrad ein Zahnrad, ein Kettenrad oder ein profiliertes Rad ist, wobei ein Abstandsrad benachbart zu und auf der gleichen Achse wie das Kletterrad bereitgestellt ist, wobei das Abstandsrad die Eindringtiefe des Kletterrads in jeweils die Zahnstange, die Kette oder das Profil begrenzt, das auf der ersten vertikalen Oberfläche der vertikalen Schiene vorhanden ist.

7. Verfahren nach einem der vorhergehenden Ansprüche, wobei, wenn das Schwenkmittel in der zweiten Position ist, der Abstand zwischen dem Schwerpunkt und der ersten vertikalen Oberfläche der vertikalen Schiene geringer als der Abstand zwischen dem Schwerpunkt und der zweiten vertikalen Oberfläche der vertikalen Schiene ist.

8. Verfahren nach einem der vorhergehenden Ansprüche, wobei das vertikale Antriebssystem ein erstes und ein zweites Klettersystem umfasst, ein Klettersystem auf jeder von der linken und der rechten Seite des Shuttles, wobei das Shuttle einen ersten und einen zweiten Motor umfasst, wobei der erste Motor das erste Klettersystem antreibt, wobei der zweite Motor das zweite Klettersystem antreibt.

9. Verfahren nach Anspruch 8, wobei das horizontale Antriebssystem zumindest vier Antriebsräder umfasst, wobei zwei auf der linken Seite des Shuttles positioniert sind, wobei zwei auf der rechten Seite des Shuttles positioniert sind, wobei zumindest eines der Antriebsräder auf der linken Seite durch den ersten Motor angetrieben wird, wobei zumindest eines der Antriebsräder auf der rechten Seite durch den zweiten Motor angetrieben wird.

10. Verfahren nach Anspruch 9, wobei jeder Motor mit einem Kopplungsmittel bereitgestellt ist, um den Motor an eines von zumindest einem der Antriebsräder oder an das Klettersystem zu koppeln.

11. Verfahren nach einem der vorhergehenden Ansprüche, wobei der Flügel ein Führungsmittel (61) umfasst, um zu verhindern, dass sich das Shuttle seitwärts in Richtung der Achse des Kletterrads über einen maximalen Abstand hinaus bewegt.

12. Verfahren nach einem der vorhergehenden Ansprüche, wobei das Shuttle ferner ein Schwenkrad an einer von der Vorder- oder der Rückseite des Shuttles umfasst, wobei die Ebene, die durch den tiefsten Punkt des Schwenkrads und die tiefsten Punkte von zwei Antriebsrädern an der linken und der rechten Seite des Shuttles definiert ist, wobei die zwei Antriebsräder einander auf der Vorder- und der Rückseite des Shuttles am nächsten sind, in Sichtweite der Ebene, die durch die tiefsten Punkte der Antriebsräder an der linken und der rechten Seite des Shuttles definiert ist, nach unten geneigt ist.

13. Verfahren nach einem der vorhergehenden Ansprüche, wobei das horizontale Antriebssystem ferner horizontale Führungsräder umfasst, die zusammen mit dem Einziehen und Erweitern der Antriebsräder einziehbar und erweiterbar sind.

14. Verfahren nach einem der vorhergehenden Ansprüche, wobei auf jeder Seite des Shuttles die Antriebsräder gepaart sind, wobei der Zwischenachsabstand zwischen den Antriebsrädern von jedem der Paare von Antriebsrädern ausgelegt ist, um die Lücke zwischen benachbarten horizontalen Schienen zu überbrücken.

15. Verfahren nach einem der vorhergehenden Ansprüche, wobei das Regalsystem ein automatisiertes Shuttle-Regalsystem für Kleinteile ist.

## Revendications

1. Procédé pour propulser une navette dans un système de rayonnage, le procédé comprenant les étapes suivantes
- la fourniture d'un système de rayonnage comportant des pistes verticales (100) et des pistes horizontales (55), les pistes horizontales définissant au moins deux niveaux ;
- la fourniture d'une navette (10) pour se propulser horizontalement et verticalement dans ledit système de rayonnage, la navette comprenant un système de propulsion horizontale (20) pour se propulser sur des pistes horizontales et un système de propulsion verticale (30) pour se propulser dans des pistes verticales,
• le système de propulsion horizontale comprend au moins 4 roues de propulsion (11, 12), lesquelles roues sont chacune rétractables et extensibles vers et à partir de l'un des côtés gauche et droit de la navette ; **caractérisé en ce que** :
• le système de propulsion verticale comprend au moins un premier système d'escalade comprenant une aile verticale (13) rétractable et extensible vers et à partir du côté gauche ou droit de la navette ;
ladite au moins une première aile verticale comprenant au moins deux roues rotatives (14, 15, 16), chacune pouvant tourner autour d'un axe de roue, les au moins deux roues rotatives étant
• une roue d'escalade (14) adaptée pour exercer un mouvement de rotation pour une propulsion verticale sur une première surface verticale d'une piste verticale ;
• une roue de pression (15, 16) adaptée pour assurer le guidage vertical de la navette et pour fournir une contre-pression durant la propulsion verticale vers une seconde surface de la piste verticale ;
• ladite au moins une première aile verticale comprenant un moyen de pivotement (42) adapté pour faire pivoter les deux axes de roue rotative (43, 44) des deux roues rotatives autour d'un axe de pivotement (17) entre une première position, dans laquelle la roue d'escalade et la roue de pression ne sont pas en contact avec la première et la seconde surface verticale, et une seconde position, dans laquelle la roue d'escalade et la roue de pression sont en contact respectivement avec la première et la seconde surface verticale ; ledit procédé comprenant les étapes suivantes :
- positionner la navette avec son premier système d'escalade devant une piste verticale, les deux roues rotatives étant dans la première position ;
- étendre l'aile vers la piste verticale ;
- faire tourner le moyen de pivot pour amener les deux roues rotatives dans la seconde position ;
- faire tourner la roue d'escalade pour déplacer la navette vers le haut afin de rompre le contact des roues de propulsion avec la piste horizontale ;
- rétracter les roues de propulsion ;
- propulser la navette à un niveau différent dans le système de rayonnage, la navette étant amenée au-dessus de ce niveau différent ;
- extraire les roues de propulsion ;
- faire tourner la roue d'escalade pour déplacer la navette vers le bas afin d'établir le contact des roues de propulsion avec la piste horizontale ;
- faire tourner le moyen de pivot pour amener les deux roues rotatives dans la première position ;
- rétracter l'aile au loin de la piste verticale.

2. Procédé selon la revendication 1, ledit moyen de pivotement comprenant
• un système de came et/ou
• un moteur et/ou
• un levier (48) et/ou
• un moyen de conversion pour convertir un mouvement horizontal de la navette en un pivotement des deux axes de roue des deux roues rotatives autour d'un axe de pivot d'une première position à une seconde position.

3. Procédé selon la revendication 1 ou 2, ladite aile comprenant un système de came (149) pour conduire le moyen de pivotement, le système de came comprenant un levier, ledit système de came étant un parmi
• une roue excentrique ou un cylindre excentrique éventuellement avec une circonférence externe irrégulière poussant le levier ;
• une roue ou un cylindre doté d'une fente dans laquelle une broche couplée au levier est positionnée de manière coulissante dans ladite fente.

4. Procédé selon l'une quelconque des revendications 1 à 3, ladite largeur de l'aile étendue étant inférieure à 35 mm, ce qui permet de passer les pistes horizontales tout en propulsant verticalement.

5. Procédé selon l'une quelconque des revendications précédentes, ladite roue d'escalade étant une parmi
• une roue dentée (41) adaptée pour venir en prise avec une barre dentée prévue au niveau de la première surface verticale de la piste verticale ;
• un pignon adapté pour venir en prise dans une chaîne verticale présente au niveau d'une première surface verticale de la piste verticale ;
• une roue d'escalade profilée adaptée pour venir en prise avec un profil correspondant présent sur la première surface verticale de la piste verticale ;
• une roue de friction adaptée pour venir en prise sur la première surface verticale de la piste verticale.

6. Procédé selon la revendication 5, ladite roue d'escalade étant une roue dentée, un pignon ou une roue profilée, une roue d'écartement étant prévue adjacente au même axe que ladite roue d'escalade et sur celui-ci, ladite roue d'écartement limitant la profondeur de pénétration de la roue d'escalade dans respectivement la barre dentée, la chaîne ou le profil présent sur la première surface verticale de la piste verticale.

7. Procédé selon l'une quelconque des revendications précédentes, lorsque le moyen de pivot est dans la seconde position, ladite distance entre le point de gravité et la première surface verticale de la piste verticale étant inférieure à la distance entre le point de gravité et la seconde surface verticale de la piste verticale.

8. Procédé selon l'une quelconque des revendications précédentes, ledit système de propulsion verticale comprenant un premier et un second système d'escalade, un système d'escalade au niveau de chacun des côtés gauche et droit de la navette, ladite navette comprenant un premier et un second moteur, le premier moteur entraînant le premier système d'escalade, le second moteur entraînant le second système d'escalade.

9. Procédé selon la revendication 8, ledit système de propulsion horizontale comprenant au moins quatre roues de propulsion, deux étant positionnées du côté gauche de la navette, deux étant positionnées du côté droit de la navette, au moins l'une des roues de propulsion du côté gauche étant entraînée par le premier moteur, au moins l'une des roues de propulsion du côté droit étant entraînée par le second moteur.

10. Procédé selon la revendication 9, chaque moteur étant doté d'un moyen de couplage pour coupler le moteur à au moins l'une des roues de propulsion ou au système d'escalade.

11. Procédé selon l'une quelconque des revendications précédentes, ladite aile comprenant un moyen de guidage (61) pour empêcher la navette de se déplacer latéralement dans la direction de l'axe de la roue d'escalade au-delà d'une distance maximale.

12. Procédé selon l'une quelconque des revendications précédentes, ladite navette
comprenant en outre une roue pivotante au niveau de l'un des côtés avant ou arrière de la navette, le plan défini par le point le plus bas de la roue pivotante et les points les plus bas de deux roues de propulsion au niveau des côtés gauche et droit de la navette, lesquelles deux roues de propulsion sont les plus proches de l'autre des côtés avant et arrière de la navette, étant incliné vers le bas en vue du plan défini par les points les plus bas des roues de propulsion au niveau des côtés gauche et droit de la navette.

13. Procédé selon l'une quelconque des revendications précédentes, ledit système de propulsion horizontale comprenant en outre des roues de guidage horizontales, qui sont rétractables et extensibles conjointement avec la rétraction et l'extension des roues de propulsion.

14. Procédé selon l'une quelconque des revendications précédentes, de chaque côté de la navette, lesdites roues de propulsion étant appariées, ladite distance interaxiale entre les roues de propulsion de chacune des paires de roues de propulsion étant adaptée pour couvrir l'espace entre les pistes horizontales adjacentes.

15. Procédé selon l'une quelconque des revendications précédentes, ledit système de rayonnage étant un système de rayonnage de navette de petites pièces automatisé.
